Europäisches Patentamt

European Patent Office

Office européen des brevets

(19)

(11) Veröffentlichungsnummer: **0 196 442**
**B1**

(12)  EUROPÄISCHE PATENTSCHRIFT

(45) Veröffentlichungstag der Patentschrift: 06.06.90

(51) Int. Cl.⁵: **F 16 L 33/02**

(21) Anmeldenummer: **86102236.6**

(22) Anmeldetag: **20.02.86**

(54) **Rohrschelle.**

(30) Priorität: **28.03.85 DE 3511261**

(43) Veröffentlichungstag der Anmeldung:
**08.10.86 Patentblatt 86/41**

(45) Bekanntmachung des Hinweises auf die
Patenterteilung:
**06.06.90 Patentblatt 90/23**

(84) Benannte Vertragsstaaten:
**AT BE CH FR GB IT LI NL SE**

(56) Entgegenhaltungen:
**DE-B-2 255 761**
**DE-C-3 235 329**
**DE-U-1 808 156**
**FR-A-1 450 321**
**FR-A-2 102 596**
**US-A-1 690 643**

(73) Patentinhaber: **HYDAC Technology GmbH**
**Industriegebiet**
**D-6603 Sulzbach/Saar (DE)**

(72) Erfinder: **Fetsch, Rudolf, Dr.-Ing.**
**Wiesenstrasse 72**
**D-6670 St. Ingbert (DE)**

(74) Vertreter: **Patentanwälte Phys. Bartels Dipl.-Ing.**
**Fink Dr.-Ing. Held**
**Lange Strasse 51**
**D-7000 Stuttgart 1 (DE)**

Courier Press, Leamington Spa, England.

**Beschreibung**

Die Erfindung betrifft eine Rohrschelle mit einem Rastverschluß mit den Merkmalen a) bis e) des Anspruches 1.

Bei einer bekannten Rohrschelle mit einem Restverschluß gemäß der DE—C— 29 11 897 treten die Merkmale a) bis d) des Anspruches 1 auf. Bei dieser bekannten Rohrschelle befindet sich die Rastnase an einem in seiner Mitte nach außen geobgenen zylinderförmigen Wandteil an einem Ende des Schellenkörpers. Das andere Ende dieses Schellenkörpers ist radial nach außen gebgen und dient als Werkzeugansatz, beispielsweise für einen Schraubendreher, mittels dem sich die bekannte Rohrschelle schließen und öffnen läßt. Zum Öffnen und Schließen dieser bekannten Rohrschelle muß der Werkzeugansatz mittels Schraubendreher über die Rastnase hinweggehoben werden, damit diese in bzw. außer Eingriff mit dem Rastwiderlager kommen kann, das durch den Rand des Durchgangsloches gebildet ist, welches sich am selben Ende des Schellenkörpers wie der Werkzeugansatz befindet. Hierfür sind hohe Bedienkräfte notwendig, die von der Bedienperson aufzubringen sind. Auch ist ein Verziehen des Schellenkörpers hierbi möglich, was die Schelle für weitere Verwendungen unbrauchbar werden läßt.

Bei einer weiteren bekannten Rohrschelle mit einem Rastverschluß gemäß der US—A—1 690 643 sind die Merkmale a) und b) sowie d) und e) des Anspruches 1 vorbekannt. Bei dieser bekannten Rohrschelle ist die Rastnase im selben Bereich eines Endes des Schellenkörpers wie das Durchgangsloch angeordnet. Am anderen Ende des bekannten Schellenkörpers sind mehrere in Reihe hintereinander angeordnete Rastausnehmungen vorhanden, deren Ränder die Rastwiderlager zum Abstützen des Rastnase bilden. Diese bekannte Rohrschelle paßt sich an verschiedene von ihr aufzunehmende rohrförmige Körper an, die einem bestimmten Größenbereich unterschiedliche Durchmesser aufweisen. Allerdings stehen nach dem Schließen der bekannten Rohrschelle, deren Enden tangential von Umfang des aufgenommenen rohrförmigen Körpers aus gesehen nach außen hin ab, so daß beim Abisolieren des Rohres einschließlich der Schelle mit einem Außenmaterial, das überlicherweise um den in der Schelle aufgenommenen rohrförmigen Körper herumgewickelt wird, unabhängig von der Wickelrichtung jeweils ein Ende des Schellenkörpers dem Isoliermaterial entgegensteht, so daß ein sauberer Wicklungsverlauf an den hevorstehenden Enden des geschlossenen Schellenkörpers nicht erreichbar ist und Beschädigungen des Isoliermaterials nicht auszuschließen sind.

Der vorliegenden Erfindung liegt ausgehend von dem vorgenannten Stand der Technik die Aufgabe zugrunde, eine Rohrschelle zu schaffen, die sich mit geringen Betätigungskräften leicht öffnen und schließen läßt und die beim Abisolieren des in der Schelle augenommenen Rohres mit aufzuwickelndem Isoliermaterial keine Probleme bereitet. Diese Aufgabe wird durch die Kombination aller Merkmale a) bis e) des Anspruches 1 erfindungsgemäß gelöst.

Dadurch, daß bei der erfindungsgemäßen Rohrschelle beim Schließen und Öffnen die Rastnase das Durchgangsloch durchfährt und im geschlossenen Zustand der Rohrschelle sich diese Rastnase an einer vom Durchgangsloch getrennten Rastausnehmung abstützt, brauch das Durchgangsloch nicht wie bei der bekannten Rohrschelle nach der DE—C— 29 11 897 jeweils über die Rastnase hingweggezoggen wirden, so daß sich ein Schließen und Öffnen mit geringen Betätigungskräften erreichen läßt. Ferner steht bei der erfindungsgemäßen Rohrschelle anders als bei der Schelle nach der US—A—1 690 643 nur das Ende von Schellenkörpers radial hervor, welches das Durchgangsloch aufweist, so daß dieses allein hervorstehende Teil bei entsprechender Wahl der Wickelrichtung des Isoliermateriales weder das Abisolieren des Rohres erschwert, noch das Isoliermaterial beschädigt.

Das Lösen der Rasteinrichtung wird durch die Merkmale des Anspruches 3 erschwert.

Der Anspruch 4 ist auf eine vorteilhafte, leicht herstellbare Ausbildung der Rastausnehmung gerichtet.

Die Anwendung der Merkmale des Anspruches 5 führen zu einer raumsparenden Bauform in radialer Richtung im Bereich der Rasteinrichtung.

Die Merkmale des Ansprüches 6 dienen zur Sicherung der Schließlage der Rasteinrichtung.

Weitere Vorteile ergeben sich aus den übrigen Ansprüchen, der Beschreibung und der Zeichnung. In dieser sind zwei Rohrschellen als Ausführungsbeispiele des Gegenstandes der Erfindung schematisch dargestellt. Es zeigen

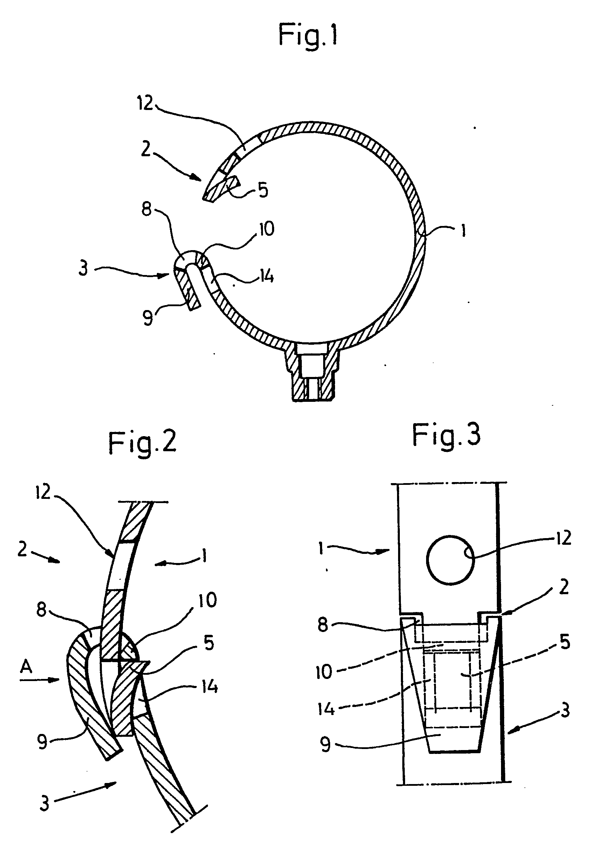

Fig. 1 einen Querschnitt durch ein erstes Ausführungsbeispiel,

Fig. 2 einen Ausschnitt aus Fig. 1 in größerem Maßstab mit anderen Lagen von Teilen,

Fig. 3 eine Ansicht in Richtung des Pfeiles A in Fig. 2,

Fig. 4 einen Ausschnitt entsprechend Fig. 2 aus einem zweiten Ausführungsbeispiel in etwas anderem Maßstab.

Die Rohrschelle hat einem aus einem Stahlband hergestellten, im wesentlichen eine Kreisform bildenden Schellenkörper 1, der Körperenden 2, 3 aufweist. Am schmäler als der Schellenkörper 1 ausgebildeten Körperende 2 ist ein Rastnase 5 vorgesehen, die als nach innen stehender Lappen derart ausgestanzt ist, daß noch eine Verbindung zwischen dem äußersten Abschnitt dieses Körperendes und dem Lappen besteht, der wieder schmäler als das Körperende 2 ist.

Das Körperende 3 ist nach außen umgebogen und hat in seinem gebogenen Teil ein Durchgangsloch 8. die Länge des Durchgangsloches 8 längs des Endes 3 des Schellenkörpers 1 gesehen entspricht etwa dem radialen Abstand zwischen den am weitesten voneinander entfernten Abschnitten der Rastnase 5 und des dieser gegenüberliegenden Wandteils des Schellenkörpers 1.

In Richtung zum Schellenkörper gesehen, ist im Körperende 3 ein Rastloch 14 im Bereich des auf dem Umfang der Rohrschelle liegenden Teile des Schellenkörpers 1 angeordnet. Zwischen dem Durchgangsloch 8 und dem Rastloch 14 befindet sich ein als Widerlager für die Rastnase 5 dienender Steg 10. Ein Endabschnitt 9 des Körperende 3 verläuft im wesentlichen parallel zum Schellenkörper und überdeckt das Rastloch 14. Der Abstand zwischen dem Endabschnitt 9 und dem benachbarten Teil des Schellenkörpers 1 ist etwas kleiner als der größte Abstand zwischen dem innen liegenden Teil der Rastnase 5 und dem außen liegenden benachbarten Teil des Schellenkörpers 1. Eine als durchgehendes Loch ausgebildete Ausnehmung 12 ist im Bereich des Körperendes 2 nahe der Rastnase 5 vorgesehen.

An dem Schellenkörper 1 befindet sich eine Einrichtung zum Befestigen an einem ortsfesten Körper. Diese Einrichtung besteht beim Ausführungsbeispiel aus einem nach aüßen ausgeformten büchsenförmigen Teil, der ein Innengewinde hat und unter einem Zentriwinkel von etwa 90° zum Körperende 3 angeordnet ist.

Wenn ein nicht dargestelltes Rohr in den Schellenkörper eingelegt ist, wird das Körperende 2 durch das Durchgangsloch 8 hindurchgesteckt, wobei der stirnseitige Rand des Körperendes 2 and dem Endabschnitt 9 geführt wird, bis die Rastnase 5 in das Rastloch 14 einrastet und sich an dem Steg 10 stirnseitig abstützt. Beim Einführen der Rastnase 5 in das Durchgangsloch 8 wird der Endabschnitt 9 elastisch nach außen gebogen. Der Zwischenraum zwischen diesem Endabschnitt 9 und dem benachbarten Teil des Schellenkörpers 1 ist so groß, daß in Schließage des Schellenkörpers 1 der Endabschnitt 9 unter elastischer Vorspannung steht und die Rastnase 5 an dem Steg 10 zu halten sucht. Zum Verbinden der Körperenden 2, 3 kann ein Werkzeug verwendet werden, das in die Ausnehmung 12 auf der einen Seite eingreift und sich am stirnseitigen Ende des Endabschnittes 9 abstützt.

Zum Lösen der Rasteinrichtung wird der Endabschnitt 9 elastisch nach außen gedrückt und die Rastnase 5 gegebenenfalls unter Verwendung eines Werkzeuges in radialer Richtung vom Steg 10 entfernt, so daß das Körperende 2 aus dem Durchgangsloch 8 austreten kann.

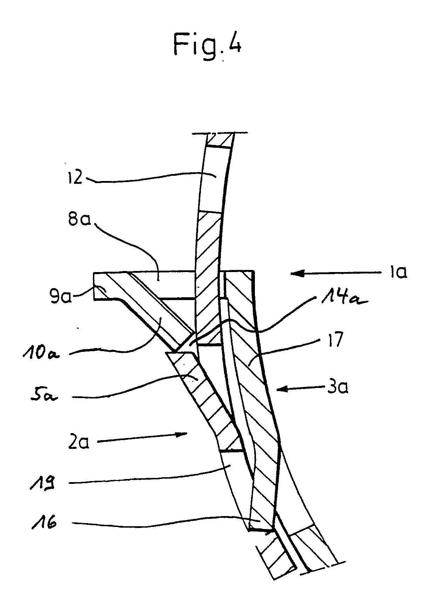

Beim zweiten Ausführungsbeispiel nach Fig. 4 sind gleiche Teile wie beim ersten Ausführungsbeispiel mit gleichen Bezugszeichen versehen, wobei abgewandelten Teilen der Buchstabe a angefügt ist.

Ein Stützlappen 16 ist im Bereich des das Durchgangsloch 8a aufweisenden Körperendes 3a des Schellenkörpers 1a angebracht, wobei sich das Durchgangsloch 8a in einem radial nach außen stehenden Abschnitt 9a under der Stützlappen 1b im Bereich des auf dem Umfang der Rohrschelle liegenden Teiles des Schellenkörpers 1a befinden. Eine Stützausnehmung 19 ist im Körperende 2a vorgesehen und ihr außen liegender Rand dient als Widerlager für den Stützlappen 16.

Der Stützausnehmung 19 folgt am Körperende 2a in Richtung zum Schellenkörper 1a die nach außen gebogene Rastnase 5a, deren freie Stützkante in Schließlage des Schellenkörpers 1a dem Durchgangsloch 8a benachbart ist und an einem Ende eines aus dem Körperende 3a ausgebogenen und zur Richtnase 5a gerichteten Rastwiderlager 10a ansteht. Das in Fig. 4 gesehen in Richtung zur Richtnase 5a vorstehende Rastwiderlager 10a begrenzt das Durchgangsloch 8a und gibt dieses mindestens teilweise frei. Das Rastwiderlager 10a sichert die Anlage des Körperendes 2a an dem den Sicherungslappen 16 aufweisenden Bereich des Körperendes 3a und verhindert in gleicher Weise wie der Sicherungslappen 16 beim Anstehen an der durch die Stützausnehmung 19 gebilteten Wandfläche ein Entfernen des die Rastnase 5a und die Stützausnehmung 19 aufweisenden, in das Durchgangsloch 8a passenden Körperendes 2a aus diesem Durchgangsloch.

Zum Entfernen des Körperendes 2a aus dem Durchangsloch 8a werden insbesondere mit Hilfe eines Werkzeuges sowohl der Stützlappen 16 als auch die Rastnase 5a in Richtung zur Mitte des Schellenkörpers 1a gedrück. Beim Einstecken des Körperendes 2 in das Durchangsloch 8a können die Rastnase 5a, das Rastwiderlager 10a und gegebenenfalls auch der Stützlappen 16 radial elastisch nachgeben.

Das Körperende 2a kann in Fig. 4 gesehen oberhalb des Durchgangsloches 8a einen zum Abstützen auf dem inneren Rand des Durchgangsloches vorgesehenen Absatz aufweisen.

Auf die Rastnase 5a kann verzichtet werden, wenn der Stützlappen 16 neben dem Durchgangsloch 8a bei verhältnismäßig kurzem Steg 17 angeordnet ist. Das Rastwiderlager 10a liegt dann in Bereich der Stützausmehmung 19 an dem Körperende 2a an.

Beim ersten Ausführungsbeispiel kann die Rasteinrichtung 16, 19 des zweiten Ausführungsbeispieles und umgekehrt angewandt werden.

## Patentansprüche

1. Rohrschelle mit einem Rastverschluß, der a) eine Rastnase (5, 5a) im Bereich eines Endes (2, 2a) eines Schellenkörpers (1, 1a) und b) ein mit der Rastnase in Schließlage des Rastverschlusses zusammenwirkendes Rastwiderlager (10, 10a) im Bereich des anderen Endes des Schellenkörpers hat, und c) mit einem von der Rastnase durchsetzbaren Durchgangsloch (8, 8a) im Bereich eines der Enden des Schellenkörpers, wobei d) sich die Rastnase an einem im Bereich eines der Enden des Schellenkörpers ausgeschnittenen und ausgebogenen Abschnitt befindet, und e) vom Durchgangsloch getrennt eine Rastausnehmung (14, 14a) vorgesehen ist, an deren Rand die Rastnase abstützbar ist.

2. Rohrschelle nach Anspruch 1, dadurch gekennzeichnet, daß die Rastausnehmung (14, 14a) als durchgehendes Loch ausgebildet ist, dessen dem Durchangsloch benachbarter Wandteil (10, 10a) zum Abstützen der Rastnase (5, 5a) dient.

3. Rohrschelle nach Anspruch 1 oder 2, dadurch gekennzeichnet, daß die Länge des Durchgangsloches (8, 8a) längs des Endes (3, 3a) des Schellenkörpers (1, 1a) gesehen etwa dem radialen Abstand zwischen den am weitesehen voneinander entfernten Abschnitten der Rastnase (5, 5a) und des dieser gegenüberliegenden Wandteils des Schellenkörpers (1, 1a) entspricht.

4. Rohrschelle nach Anspruch 1 dadurch gekennzeichnet, daß die Rastausnehmung (14) im Bereich des auf dem Umfang der Rohrschelle liegenden Teils des Schellenkörpers angeordnet ist.

5. Rohrschelle nach einem der vorhergehenden Ansprüche, dadurch gekennzeichnet, daß das das Durchgangsloch (8) aufweisende Körperende (3) der Rohrschelle zum Schellenkörper (1) hin eingebogen ist, wobei sich das Durchgangsloch im Bereich des gebogenen Teiles der Rohrschelle befindet.

6. Rohrschelle nach Anspruch 5, dadurch gekennzeichnet, daß der umgebogene Teil das das Durchgangsloch (8) aufweisenden Körperendes (3) über die Rastausnehmung (14) reicht, elastisch nachgiebig ist und endseitig einen Abstand vom benachbarten Teil des Schellenkörpers hat, der etwas kleiner als die Dicke des Schellenkörpers (1) ist.

7. Rohrschelle nach einem der Ansprüche 1 bis 3, dadurch gekennzeichnet, daß am Rand des Durchgangslöches (8a) ein im Bereich des vom Durchgangsloch abgewandten Ende des Schellenkörpers das Rastwiderlager (10a) vorgesehen ist.

8. Rohrschelle nach Anspruch 7, dadurch gekennzeichnet, daß an dem Ende (3a) des Schellenkörpers (1a), welches das Durchgangsloch (8a) aufweist, ein Stützlappen (16) aus diesem Ende (3a) ausgebogen ist, das in Schließlage des Rastverschlusses in eine Stützausnehmung (19) im anderen Ende (2a) des Schellenkörpers (1a) eingreift.

**Revendications**

1. Collier de serrage pour tuyaux qui comporte un nez (5, 5a) dans la région de l'une des extrémités de son corps (1, 1a) et une surface d'arrêt ou de réaction (10, 10a) qui coopère avec ledit nez d'arrêt (5, 5a) situé à l'autre extrémité dudit corps (1, 1a), ainsi qu'un trou de passage (8, 8a) pouvant être traversé par ledit nez d'arrêt (5, 5a) situé dans la région de l'une des extrémités dudit corps (3, 3a), cependant que le nez d'arrêt (5, 5a) est situé à une section découpée et pliée de l'une des extrémités (2, 2a) du corps (1, 1a) du collier, tandis qu'un trou d'arrêt (14, 14a) séparé du trou de passage (8, 8a) est prévu contre le bord duquel peut prendre appui le nez d'arrêt (5, 5a).

2. Collier de serrage selon la revendication 1, caractérisé en ce que le trou d'arrêt (14) est situé dans la région de la partie du corps située le long du pourtour de celui-ci.

3. Collier de serrage selon la revendication 1, caractérisé en ce que le trou d'arrêt (14, 14a) est un trou ouvert à ses deux extrémités et dont la partie (10, 10a) de la paroi voisine dudit trou sert d'appui pour le nez d'arrêt (5, 5a).

4. Collier de serrage selon la revendication 1 ou 2, caractérisé en ce que la longueur du trou de passage (8, 8a) le long de l'etrémité (3, 3a) du corps (1, 1a) du collier correspond approximativement à l'espacement radial des sections les plus éloignées entre elles du nez d'arrêt (5, 5a) et de la partie de paroi opposée à celui-ci du corps du collier (1, 1a).

5. Collier de serrage selon l'une quelconque des revendications précédentes, caractérisé en ce que l'extrémité (3) du corps présentant le trou de passage (8) du collier de serrage est pliée vers le corps (1) et en ce que le trou de passage est situé dans la partie pliée de ce dernier.

6. Collier de serrage selon la revendication 5, caractérisé en ce que la partie repliée de l'extrémité (3) du corps présentant le trou de passage (8) s'étend au-dessus du trou d'arrêt (14) et est élastiquement flexible, cettet dite partie repliée étant espacée de la partie voisine du corps du collier d'une distance légèrement inférieure à l'épaisseur du corps (1) du collier.

7. Collier de serrage selon l'une des revendications 1 à 3, caractérisé en ce qu'au bord du trou de passage (8a) est prévue une extrémité du corps du collier opposée au trou de passage et formant une surface de réaction (10a).

8. Collier de serrage selon la revendication 7, caractérisé en ce que, à l'extrémité (3a) du corps (1a) du collier qui présente le trou de passage (8a), est prévue une patte d'appui (16) pliée qui, en position fermée du collier, s'engage dans une ouverture d'arrêt (19) de l'autre extrémité (2a) du corps (1a) du collier de serrage.

**Claims**

1. Pipe clip with a drop-in fastener, which a), has a drop-in lug (5, 5a) in the region of one end (2, 2a) of a clip body (1, 1a) and b) a drop-in abutment (10, 10a) co-operating with the drop-in lug in the closing position of the drop-in fastener in the region of the other end of the clip body and c) with a through hole (8, 8a) in the region of one of the ends of the clip body, through which the drop-in lug may pass, d) the drop-in lug being located on a section cut-out and bent-out in the region of one of the ends of the clip body, and e) separate from the through hole, a drop-in recess (14, 14a) being provided, on the edge of which the drop-in lug can be supported.

2. Pipe clip according to Claim 1, characterised in that the drop-in recess (14, 14a) is constructed as a through hole, whereof the wall part (10, 10a) adjacent the through hole serves to support the drop-in lug (5, 5a).

3. Pipe clip according to Claim 1 or 2 characterised in that the length of the through hole (8, 8a), seen along the end (3, 3a) of the clip body (1, 1a), corresponds approximately to the radial distance between the sections of the drop-in lug (5, 5a) which are furthest apart and of the wall portion of the clip body (1, 1a) located opposite the latter.

4. Pipe clip according to Claim 1, characterised in that the drop-in recess (14) is located in the region of the part of the clip body lying on the periphery of the pipe clip.

5. Pipe clip according to one of the preceding Claims, characterised in that the end of the body (3) of the pipe clip comprising the through hole (8) is bent in towards the clip body (1), the through hole being located in the region of the bent part of the pipe clip.

6. Pipe clip according to Claim 5, characerised in that the bent over part of the end of the body (3) comprising the through hole (8) extends beyond the drop-in recess (14), is elastically resilient and at the end is at a distance from the adjacent part of the clip body, which is somewhat smaller than the thickness of the clip body (1).

7. Pipe clip according to one of Claims 1 to 3, characterised in that provided on the edge of the through hole (8a), in the region of the end of the clip body remote from the through hole, is the drop-in abutment (10).

8. Pipe clip according to Claim 7, characterised in that at the end (3a) of the clip body (1a), which comprises the through hole (8a), a support tongue (16) is bent out of this end (3a), which in the closed position of the drop-in fastener engages in a support recess (19) in the other end (2a) of the clip body (1a).

Fig.1

Fig.2

Fig.3

1

Fig.4

12

8a

9a

1a

10a

14a

5a

17

2a

3a

19

16